# EUROPEAN PATENT SPECIFICATION

(11) **EP 0 374 522 B1**
(45) Date of publication and mention of the grant of the patent: **25.01.1995**
(21) Application number: 89121714.3
(22) Date of filing: 24.11.1989
(51) Int. Cl.: C08L 61/30, C08L 31/04, C08K 3/00, B27N 3/00, C08L 97/02

(54) **Binding compositions for fire-retarded ligno-cellulosic composites and process for preparing them**
Bindemittel für schwerentflammbare lignozellulosehaltige Verbundstoffe und Verfahren zu ihrer Herstellung
Compositions liantes pour composites lignocellulosiques ignifugés et procédé pour les préparer

(30) Priority: 25.11.1988 IT 2273088
(43) Date of publication of application: 27.06.1990
(73) Proprietor: MINISTERO DELL' UNIVERSITA' E DELLA RICERCA SCIENTIFICA E TECNOLOGICA, 00196 Roma (IT)
(72) Inventor: Zavatterri, Ignazio, I-21010 Cardano al Campo Varese (IT); Cova, Mario, I-21053 Castellanza Varese (IT)
(74) Representative: Weinhold, Peter, Dr.

(56) References cited:
- CHEMICAL ABSTRACTS, vol. 89, 16th October 1978, page 57, abstract no. 13070g,Columbus, Ohio, US; & JP-A-78 64 241
- PATENT ABSTRACTS OF JAPAN, vol. 4, no. 50 (C-7)[532];& JP-A-55 21 422

## Description

The present invention relates to binding compositions for fire-retarded, substantially ligno-cellulosic composite materials and to a process for their manufacture.

The present invention also relates to the ligno-cellulosic materials treated with the above compositions and with fire-retardant agents, and to their use as prefabricated elements, in particular for the building industry.

In particular, the present invention relates to compositions based on amine binding agents and on water-dispersed acetovinyl resins, associated with fire-retardant agents, to be used with ligno-cellulosic materials, such as wood, bark, and the like, as granulates, chips, fibres, and so on, for the manufacture of particle boards or other composites.

With such compositions it is possible, on the one hand, to endow the treated materials with good green tack characteristics, as better defined in the following, and, on the other hand, to produce ligno-cellulosic composites with good mechanical characteristics and good fire resistance.

The production of fire-retarded ligno-cellulosic composites is of fundamental importance,above all for use in the building industry.

One of the main requirements which the binding compositions intended for the production of such substantially ligno-cellulosic composite materials are to meet, is that they should impart good green tack values, i.e., they should prevent any shifting of the layers of chips of the cold press moulded mattress, due to vibrations during the transport from the impregnating machine to the moulding press.

Such a requirement is particularly important in the case of high belt speed and/or multi-daylight plants.

The green tack can more or less be exalted by the formulation of the binding composition, and in particular can be endangered by the presence of the fire-retardant agents which are necessary for the composites to be used in the building industry.

In fact, in the industrial practice, as fire-retardant agents for this field of application, phosphorus and boron compounds, antimony oxides and aluminum hydroxide, halogenated organic materials and the like are used either as individual compounds or combined with one another.

They are generally added to the wood chips in the resinating machine, directly in powder form.

The addition of the above fire-retardant agents in the production of fire-retarded particle boards with the traditional binding compositions on the one hand reduces the green tack of the mattress and, on the other hand, leads to a decrease in the mechanical strength of the particle boards (e.g. tensile strength and flexural strength).

The availability of compositions which are able to minimize the above drawbacks is therefore very valuable, and highly interesting from an industrial point of view.

One object of the present invention is the provision of binding compositions to be used in the production of fire-retarded, substantially ligno-cellulosic composite materials, and the process for their manufacturing.

Another object is to provide composite materials, in particular ligno-cellulosic, fire-retarded composite materials, as prefabricated elements, such as particle boards, with substantially unchanged physical and mechanical characteristics.

It has now, surprisingly, been found that with the use of suitable compositions, as defined in the following, satisfactory levels of green tack of the mattress and of mechanical strength and of fire resistance of the particle boards can be obtained.

The latter properties, in particular, are in compliance with the V20 rating according to DIN 68763, and to Class 1 of fire-resistance according to the Decree of June 26th, 1984 by the Italian Ministry for Internal Affairs (Official Gazette No. 234, Supplement of Aug. 25th, 1984).

These and still other objects, which will become clearer to those skilled in the art from the following disclosure, are achieved, according to the present invention, by binding compositions, comprising an aqueous dispersion of:
a) at least one amine binding agent based on a melamine-urea-formaldehyde condensate;
b) at least one water-dispersed internally and/or externally plasticized vinyl acetate based resin having a glass transition temperature (Tg) lower than 5°C, as promoter of green tack.

The above compositions are associated,in their application, with at least one fire-retardant agent.

The above melamine-urea-formaldehyde condensates (MUF resins), with variable composition, are per se known products and are better defined in the following.

The amine binder used in the binding composition according to the present invention is preferably composed of an aqueous dispersion of a resin with a content of at least 20% by weight of melamine, at least 35% by weight of urea and at least 40% by weight of formalehyde, each of said percentages being based on 100 parts of dry resin.

As promoters of green tack, acetovinyl resins in the form of aqueous dispersions are used according to the present invention, which resins have a glass transition temperature (Tg) lower than 5°C.

Particularly preferred acetovinyl resins are those which have a glass transition temperature in the range of from -15 to 0°C and show a minimum film forming temperature of about 0°C.

In general, acetovinyl resins can be used which are internally plasticized (by copolymerization) and/or are externally plasticized (by means of the addition of plasticizers), provided that they have a Tg value lower than 5°C.

Examples of acetovinyl resins of the first type which are suitable for the compositions according to the present invention are the soft acetovinyl copolymers, obtained by means of the copolymerization of vinyl acetate with flexibility-imparting monomers, optionally combined with hardening monomers.

Examples of flexibility-imparting monomers are (preferably C₂₋₈-alpha-) olefins, such as ethylene, the high molecular weight acrylic and/or methacrylic monomers such as butyl acrylate , 2-ethyl-hexyl acrylate, lauryl acrylate, stearyl acrylate, methoxyethyl acrylate, ethoxy-methyl acrylate, the esters of unsaturated diacids, such as dibutyl maleate, di-isobutyl maleate and the like, the esters of linear or branched fatty acids with vinyl alcohol, such as vinyl versatate, vinyl laurate, vinyl octoate, vinyl caprate, vinyl stearate.

Ethylene and butyl acrylate are preferred.

Examples of suitable hardening monomers are vinyl halides, such as vinyl chloride, vinyl bromide, the low molecular weight methacrylic esters, such as methyl methacrylate and ethyl methacrylate and nitriles, such as acrylonitrile.

The flexibility-imparting monomers, optionally combined with the hardening monomers, are generally used in amounts of up to 70% by weight, based on the dry weight of the acetovinyl resin, preferably in amounts of from 10 to 60%. When the hardening monomers are present, they are used in such amounts as to keep the Tg of the acetovinyl resin lower than 5°C.

Examples of acetovinyl resins of the second type suitable for use in the compositions according to the present invention are acetovinyl homopolymers which are plasticized by means of external additives, preferably in an amount of from 5 to 50% by weight, based on the dry weight of the homopolymer.

Examples of such additives are the organic phthalates, such as dibutyl phthalate, butyl-benzyl phthalate, and the like, the organic phosphates, such as tricresyl phosphate, phthalyl glycolates, such as butyl-phthalyl glycolate and the polyesters.

More generally, all the products listed in the Encyclopedia of Chemical Technology, edited by Interscience Publishers (J.Wiley and Sons Inc.), Second Edition (1968), pages 755 and 778, can be used.

The acetovinyl dispersions according to the present invention can be selected from the commercially available products known as Vinavil® (such as, e.g., Vinavil® EVA 201, Vinavil® EVA 479, Vinavil® MV 50, Vinavil® SL, and the like) manufactured by MONTEDIPE (Italy), Vinnapas® (Wacker), Mowilith® (Hoechst).

As fire-retardant agents, those mentioned above can be used, preferably in the form of synergistic combinations according to the prior art (see Baker D.S., "Flame Retarding Wood and Timber Products", Chem.Ind. 1977 (2), pages 74-79).

Good results are obtained with the use of NH₄H₂PO₄, H₃BO₃, Al(OH)₃, either alone or in admixture with one another, or of Sb₂0₃ associated with chloroparaffin.

The amounts necessary for satisfactory results generally range from 5 to 30% by weight, based on the weight of the ligno-cellulosic material.

The binding composition according to the present invention generally contains an amount of dry material of from 40 to 80% by weight, preferably of from 40 to 60%.

More particularly, such compositions usually contain from 1 to 15% by weight, and preferably from 2 to 10% by weight, of acetovinyl resin, calculated as dry matter; and from 35 to 60% by weight, preferably from 40 to 55% by weight, of amine binding agent, also calculated as dry matter.

The binding compositions according to the present invention can be obtained by dispersing at least one amine binding agent in powder form, as defined above, in an aqueous dispersion of said vinyl acetate based resin in a suitably diluted form. Alternatively, aqueous dispersions of the individual components can be mixed in the desired mixing ratios.

In the first case, the amine binder is slowly added to the poly(vinyl acetate) dispersion, the latter being kept adequately stirred.

In the second case, the order of addition of the two components is of no importance.

The compositions according to the present invention can advantageously be used as binders for ligno-cellulosic materials, such as wood, and bark in the form of granulates, chips and fibres and in the manufacture of particle boards and other composite articles.

The present compositions generally may be added to the ligno-cellulosic material in an amount of from 5 to 25% by weight (calculated as dry weight with reference to the wood chips), and preferably of from 7 to 20%, and allow to obtain green tack values of the mattress which generally are equal to or higher than 50 N.

In the manufacture of particle boards, the acetovinyl dispersion preferably is added to the dispersion of the amine binder with mild stirring (at about 100 rpm) and within short times.

The binding composition is added to the chips, subsequently the fire-retardant agent is added, and then the mattress is press-moulded according to the prior art.

However, the process can be carried out as well by operating according to a different sequence; e.g., the fire-retardant agent can be added first, and so on.

It has also been found that satisfactory values of green tack can be obtained if the compositions according to the present invention are prepared in situ. This result can be achieved by separately adding to the cellulosic material the amine binder in aqueous dispersion, then the acetovinyl dispersion, as defined above, and finally the fire-retardant agent.

The following examples are given in order to illustrate the invention in more detail.

### EXAMPLES 1-6

### Measurement of green tack of the mattress

To 31 g of "Xilocolla® L 4580" (trade mark for a MUF resin having 65% of dry matter, manufactured by Rescol S.p.A. Italy) there were added 19 g of water and an amount of vinyl acetate based dispersion corresponding to 5 g of dry resin (Examples 2-6).

Separately, 250 g of wood chips, of the type normally used for the outer layers of particle boards and suitably sieved (size fraction within the range of from 0.3 to 1 mm), and 25 g of fire-retardant agent were introduced in a suitable mixer.

The first mixture of amine binder and vinyl acetate based dispersion was then added to the second one (i.e., the mixture in the mixer) by means of a suitable spraying device.

Immediately after the addition of the resin and thereafter at time intervals of 5 minutes, up to 30 minutes, pellets were formed from the above treated chips by applying a load of 5000 N for 30 seconds. Each pellet contained 30 g of material and had a diameter of 50 mm.

The pellets were then subjected to a breakage test on the dynamometer and the value of the breaking load (i.e., of the tensile strength) was recorded for each pellet.

The average tensile strength values of the pellets were then calculated. These average values are reported as values of green tack.

In Table 1 the tested compositions and the obtained values of green tack are given.

### EXAMPLES 7 AND 8

### Preparation of three-layered particle boards according to the prior art (Example 7) and according to the present invention (Example 8)

a) A mixture was prepared, which mixture was composed of 600 g of Xilocolla® L 4580, 154 g of water, 26 g of a 15% aqueous solution of NH₄Cl (catalyst) and, in case of Example 8 only, 107 g of Vinavil® EVA 201 (56% of dry matter).
   739 g of the above mixture were used to resinate 2,500 g of wood chips of the type used in industry for the outer layer of particle boards.
   To the resinated chips 250 g of di-hydrogen ammonium phosphate (NH₄H₂PO₄) were added.
b) Another mixture was prepared, which mixture was composed of 800 g of Xilocolla® L 4580, 76 g of water and 69 g of a 15% aqueous solution of NH₄Cl and, in case of Example 8 only, 169 g of Vinavil® EVA 201.
   943 g of the above mixture were used to resinate 4,000 g of wood chips of the type used in industry for the core layer of particle boards. To the resinated chips 400 g of NH₄H₂PO₄ were added.
c) A layer of 710 g of treated chips of type (a) was laid on a plate of 0.30 m² surface. On said layer a layer of2380 g treated chips of type (b) was placed, and on the latter layer a top layer of 710 g of treated chips of type (a) was laid.
   The mattress was press-moulded at 175°C for 4 minutes, then the panel was smoothed according to a conventional method.

In Table 2, the physico-mechanical characteristics and the fire-resistance are reported, determined as prescribed by DIN 68763 (for V20 rating) and by RF 3/77 of the Centro di Studied Esperienze (Study and Test Centre) of the Ministry for Internal Affairs of Italian Republic (igniting flame in the presence of radiant heat, wall arrangement; see Decree June 26th, 1984, Official Gazette of Aug. 26th, 1984, No. 234).

**TABLE 1**

| Ex. No. | Additive for Green Tack | Fire-retardant Agent | Tensile strength of the pellets, in N (average value from 0 to 30 min.) |
|---|---|---|---|
| 1 | -- | NH₄H₂PO₄ | 45 |
| 2 | Vinavil® EVA 201 | NH₄H₂PO₄ | 113 |
| 3 | Vinavil® EVA 201 | NH₄H₂PO₄ + H₃BO₃(9:1) | 110 |
| 4 | Vinavil® EVA 201 | NH₄H₂PO₄+Sb₂O₃ +chloroparaffin (1:0.33:0.67) | 103 |
| 5 | Vinavil® MV 50 | NH₄H₂PO₄ | 68 |
| 6 | Vinavil® EVA 479 | NH₄H₂PO₄ | 88 |

**TABLE 2**

| | | EXAMPLES | |
|---|---|---|---|
| | | 7 | 8 |
| Thickness (after smoothing) | mm | 14.3 | 14.4 |
| Specific gravity | kg/m³ | 726 | 753 |
| Moisture | % | 9.6 | 10.7 |
| Tensile strength | N/mm² | 0.84 | 1.02 |
| Flexural strength | N/mm² | 19.2 | 18.4 |
| Swelling | % | 7.4 | 8.1 |
| Fire resistance | class | 1 | 1 |
| Green tack (see Table 1) | N | 45 | 113 |

## Claims (Claims for the following Contracting State(s): AT, BE, CH, LI, DE, FR, GB, NL, SE)

1. Binding compositions, comprising an aqueous dispersion of:
(a) at least one amine binding agent based on a melamine-urea-formaldehyde condensate;
(b) at least one water-dispersed internally and/or externally plasticised vinylacetate based resin having a glass transition temperature (Tg) lower than 5°C as green tack promoter.

2. Composition according to claim 1, in which the amine binder component is composed of an aqueous dispersion with a content, based on 100 parts of dry resin, of at least 20% by weight of melamine, at least 35% by weight of urea, and at least 40% by weight of formaldehyde.

3. Composition according to any one of claims 1 and 2, in which the vinylacetate based resin has a glass transition temperature of -15 to 0°C and shows a minimum film forming temperature of about 0°C.

4. Composition according to any one of the preceding claims, in which the vinylacetate based resin is obtainable by copolymerization of vinyl acetate with flexibility-imparting monomers, selected from olefins, high molecular weight acrylic and/or methacrylic monomers, esters of unsaturated diacids and esters derived from linear or branched fatty acids and vinyl alcohol, optionally combined with hardening monomers, selected from vinyl halides, low molecular weight methacrylates and nitriles.

5. Composition according to claim 4, in which the flexibility-imparting monomers are selected from ethylene and butyl acrylate.

6. Composition according to any one of claims 4 and 5, in which the flexibility-imparting monomers, optionally combined with the hardening monomers, have been used in amounts of up to 70% by weight, based on the dry weight of the vinylacetate based resin.

7. Composition according to any one of the preceding claims, in which the vinylacetate based resins are vinylacetate homopolymers plasticized by means of external agents selected from organic phthalates, organic phosphates, phthalyl glycolates, and polyesters, in an amount of from 5 to 50% by weight, based on the dry weight of the homopolymer.

8. Composition according to any one of the preceding claims, in which the aqueous dispersion of the binding composition contains an amount of dry matter of from 40 to 80% by weight.

9. Composition according to any one of the preceding claims, in which said aqueous dispersion contains from 1 to 15% by weight of vinylacetate based resin, calculated as dry matter, and from 35 to 60% by weight of amine binding agent, also calculated as dry matter.

10. Composition according to any one of the preceding claims, additionally containing at least one fire-retardant agent.

11. Composition according to claim 10, in which the fire retardant agent is selected from NH₄H₂PO₄, H₃BO₃, Al(OH)₃, Sb₂O₃ associated with chloroparaffin, and mixtures thereof.

12. Composition according to any one of claims 10 and 11, in which the fire-retardant agent is present in amounts of from 5 to 30% by weight, based on the weight of the ligno-cellulosic material.

13. Process for preparing the binding compositions according to any one of the preceding claims comprising dispersing, with stirring, at least one amine binding agent as defined in claim 1 in an aqueous dispersion of said vinylacetate based resin or, alternatively, blending of aqueous dispersions of the individual components.

14. Use of the compositions obtained according to any one of the preceding claims as binders for ligno-cellulosic materials and in the manufacture of particle boards or other composite articles.

15. Use according to claim 14 wherein the binding composition is used in an amount of from 5 to 25% by weight, as dry weight, based on the weight of the ligno-cellulosic material.

16. Use according to any one of claims 14 and 15, wherein the binding compositions are prepared in situ on the lignocellulosic material.

## Claims (Claims for the following Contracting State(s): ES, GR)

1. A process for preparing binding compositions, characterized in that these compositions comprise an aqueous dispersion of:
(a) at least one amine binding agent based on a melamine-urea-formaldehyde condensate;
(b) at least one water-dispersed internally and/or externally plasticized vinylacetate based resin having a glass transition temperature (Tg) lower than 5°C as green tack promoter,
wherein said process comprises dispersing, with stirring, of said at least one amine binding agent in an aqueous dispersion of said vinylacetate based resin or, alternatively, blending of aqueous dispersions of the individual components.

2. Binding compositions, comprising an aqueous dispersion of:
(a) at least one amine binding agent based on a melamine-urea-formaldehyde condensate;
(b) at least one water-dispersed internally and/or externally plasticized vinylacetate based resin having a glass transition temperature (Tg) lower than 5°C as green tack promoter.

3. Composition according to claim 2, in which the amine binder component is composed of an aqueous dispersion with a content, based on 100 parts of dry resin, of at least 20% by weight of melamine, at least 35% by weight of urea, and at least 40% by weight of formaldehyde.

4. Composition according to any one of claims 2 and 3, in which the vinylacetate based resin has a glass transition temperature of -15 to 0°C and shows a minimum film forming temperature of about 0°C.

5. Composition according to any one of the preceding claims, in which the vinylacetate based resin is obtainable by copolymerization of vinyl acetate with flexibility-imparting monomers, selected from olefins, high molecular weight acrylic and/or methacrylic monomers, esters of unsaturated diacids and esters derived from linear or branched fatty acids and vinyl alcohol, optionally combined with hardening monomers, selected from vinyl halides, low molecular weight methacrylates and nitriles.

6. Composition according to claim 5, in which the flexibility-imparting monomers are selected from ethylene and butyl acrylate.

7. Composition according to any one of claims 5 and 6, in which the flexibility-imparting monomers, optionally combined with the hardening monomers, have been used in amounts of up to 70% by weight, based on the dry weight of the vinylacetate based resin.

8. Composition according to any one of the preceding claims, in which the vinylacetate based resins are vinylacetate homopolymers plasticized by means of external agents selected from organic phthalates, organic phosphates, phthalyl glycolates, and polyesters, in an amount of from 5 to 50% by weight, based on the dry weight of the homopolymer.

9. Composition according to any one of the preceding claims, in which the aqueous dispersion of the binding composition contains an amount of dry matter of from 40 to 80% by weight.

10. Composition according to any one of the preceding claims, in which said aqueous dispersion contains from 1 to 15% by weight of vinylacetate based resin, calculated as dry matter, and from 35 to 60% by weight of amine binding agent, also calculated as dry matter.

11. Composition according to any one of the preceding claims, additionally containing at least one fire-retardant agent.

12. Composition according to claim 11, in which the fire retardant agent is selected from NH₄H₂PO₄, H₃BO₃, Al(OH)₃, Sb₂O₃ associated with chloroparaffin, and mixtures thereof.

13. Composition according to any one of claims 11 and 12, in which the fire-retardant agent is present in amounts of from 5 to 30% by weight, based on the weight of the ligno-cellulosic material.

14. Use of the compositions obtained according to any one of the preceding claims as binders for ligno-cellulosic materials and in the manufacture of particle boards or other composite articles.

15. Use according to claim 14 wherein the binding composition is used in an amount of from 5 to 25% by weight, as dry weight, based on the weight of the ligno-cellulosic material.

16. Use according to any one of claims 14 and 15, wherein the binding compositions are prepared in situ on the lignocellulosic material.

## Patentansprüche (Patentansprüche für folgende(n) Vertragsstaat(en): AT, BE, CH, LI, DE, FR, GB, NL, SE)

1. Bindemittelzusammensetzung, umfassend eine wäßrige Dispersion von:
(a) wenigstens einem Amin-Bindemittel auf Basis eines Melamin-Harnstoff-Formaldehyd-Kondensats;
(b) wenigstens einem wasserdispergierten, innerlich und/oder äußerlich weichgemachten Harz auf Vinylacetat -Basis mit einer Glasübergangstemperatur (Tg) von weniger als 5°C als Verstärker der Trockenklebrigkeit.

2. Zusammensetzung nach Anspruch 1, worin sich die Aminbinder-Komponente zusammensetzt aus einer wäßrigen Dispersion mit einem Gehalt, auf Basis von 100 Teilen Trockenharz, von wenigstens 20 Gew.-% Melamin, wenigstens 35 Gew.-% Harnstoff und wenigstens 40 Gew.-% Formaldehyd.

3. Zusammensetzung nach irgendeinem der Ansprüche 1 und 2, worin das Harz auf Vinylacetat-Basis eine Glasübergangstemperatur von -15° bis 0°C besitzt und eine Minimumfilmbildungstemperatur von ungefähr 0°C zeigt.

4. Zusammensetzung nach irgendeinem der vorhergehenden Ansprüche, worin das Harz auf Vinylacetat-Basis erhältlich ist durch Copolymerisation von Vinylacetat mit flexibilitätsverleihenden Monomeren, die ausgewählt sind aus Olefinen, Acryl- und/oder Methacrylmonomeren mit hohem Molekulargewicht, Estern ungesättigter zweiwertiger Säuren und aus von linearen oder verzweigten Fettsäuren und Vinylalkohol abgeleiteten Estern, wahlweise in Kombination mit Härtermonomeren, die ausgewählt sind aus Vinylhalogeniden, Methacrylaten mit niedrigem Molekulargewicht und Nitrilen.

5. Zusammensetzung nach Anspruch 4, worin die flexibilitätsverleihenden Monomere ausgewählt sind aus Ethylen und Butylacrylat.

6. Zusammensetzung nach irgendeinem der Ansprüche 4 und 5, worin die flexibilitätsverleihenden Monomere, wahlweise in Kombination mit Härtermonomeren, in Mengen von bis zu 70 Gew.-%, auf Basis des Trockengewichts des Harzes auf Vinylacetat-Basis, eingesetzt wurden.

7. Zusammensetzung nach irgendeinem der vorhergehenden Ansprüche, worin die Harze auf Vinylacetat-Basis Vinylacetathomopolymere sind, die mittels äußerer Mittel, ausgewählt aus organischen Phthalaten, organischen Phosphaten, Phthalylglycolaten und Polyestern, in einer Menge von 5 bis 50 Gew.-% auf Basis des Trockengewichts des Homopolymers weichgemacht sind.

8. Zusammensetzung nach irgendeinem der vorhergehenden Ansprüche, worin die wäßrige Dispersion der Bindemittelzusammensetzung eine Menge an Trockenmasse von 40 bis 80 Gew.-% enthält.

9. Zusammensetzung nach irgendeinem der vorhergehenden Ansprüche, worin die wäßrige Dispersion 1 bis 15 Gew.-% Harz auf Vinylacetat-Basis, berechnet als Trockenmasse, und 35 bis 60 Gew.-% Aminbindemittel, ebenfalls berechnet als Trockenmasse, enthält.

10. Zusammensetzung nach irgendeinem der vorhergehenden Ansprüche, die zusätzlich ein flammhemmendes Mittel enthält.

11. Zusammensetzung nach Anspruch 10, worin das flammhemmende Mittel ausgewählt ist aus NH₄H₂PO₄, H₃BO₃, Al(OH)₃, mit Chlorparaffin assoziiertem Sb₂O₃, und deren Mischungen.

12. Zusammensetzung nach irgendeinem der Ansprüche 10 und 11, worin das flammhemmende Mittel in Mengen von 5 bis 30 Gew.-% auf Basis des Gewichts des Lignozellulosematerials vorliegt.

13. Verfahren zur Herstellung der Bindemittelzusammensetzungen nach irgendeinem der vorhergehenden Ansprüche, umfassend, unter Rühren, Dispergieren wenigstens eines Aminbindemittels, wie in Anspruch 1 definiert, in einer wäßrigen Dispersion des Harzes auf Vinylacetat-Basis oder, alternativ, Mischen wäßriger Dispersionen der einzelnen Bestandteile.

14. Verwendung der nach irgendeinem der vorhergehenden Ansprüche erhaltenen Zusammensetzungen als Bindemittel für Lignozellulosematerial und bei der Herstellung von Spanplatten oder anderen Verbundartikeln.

15. Verwendung nach Anspruch 14, worin die Bindemittelzusammensetzung in einer Menge von 5 bis 25 Gew.%, als Trockengewicht, auf Basis des Lignozellulosematerials eingesetzt wird.

16. Verwendung nach irgendeinem der Ansprüche 14 und 15, worin die Bindemittelzusammensetzungen in situ auf dem Lignozellulosematerial hergestellt werden.

## Patentansprüche (Patentansprüche für folgende(n) Vertragsstaat(en): ES, GR)

1. Verfahren zur Herstellung von Bindemittelzusammensetzungen, dadurch gekennzeichnet, daß diese Zusammensetzungen eine wäßrige Dispersion umfassen von:
(a) wenigstens einem Amin-Bindemittel auf Basis eines Melamin-Harnstoff-Formaldehyd-Kondensats;
(b) wenigstens einem wasserdispergierten, innerlich und/oder äußerlich weichgemachten Harz auf Vinylacetat -Basis mit einer Glasübergangstemperatur (Tg) von weniger als 5°C als Verstärker der Trockenklebrigkeit,
worin das Verfahren Dispergieren, unter Rühren, des wenigstens einen Aminbindemittels in einer wäßrigen Dispersion des Harzes auf Vinylacetat-Basis oder, alternativ, Mischen der wäßrigen Dispersionen der einzelnen Bestandteile umfaßt.

2. Bindemittelzusammensetzung, umfassend eine wäßrige Dispersion von:
(a) wenigstens einem Amin-Bindemittel auf Basis eines Melamin-Harnstoff -Formaldehyd-Kondensats;
(b) wenigstens einem wasserdispergierten, innerlich und/oder äußerlich weichgemachten Harz auf Vinylacetat -Basis mit einer Glasübergangstemperatur (Tg) von weniger als 5°C als Verstärker der Trockenklebrigkeit.

3. Zusammensetzung nach Anspruch 2, worin sich die Aminbinder-Komponente zusammensetzt aus einer wäßrigen Dispersion mit einem Gehalt, auf Basis von 100 Teilen Trockenharz, von wenigstens 20 Gew.-% Melamin, wenigstens 35 Gew.-% Harnstoff und wenigstens 40 Gew.-% Formaldehyd.

4. Zusammensetzung nach irgendeinem der Ansprüche 2 und 3, worin das Harz auf Vinylacetat-Basis eine Glasübergangstemperatur von -15° bis 0°C besitzt und eine Minimumfilmbildungstemperatur von ungefähr 0°C zeigt.

5. Zusammensetzung nach irgendeinem der vorhergehenden Ansprüche, worin das Harz auf Vinylacetat-Basis erhältlich ist durch Copolymerisation von Vinylacetat mit flexibilitätsverleihenden Monomeren, die ausgewählt sind aus Olefinen, Acryl- und/oder Methacrylmonomeren mit hohem Molekulargewicht, Estern ungesättigter zweiwertiger Säuren und aus von linearen oder verzweigten Fettsäuren und Vinylalkohol abgeleiteten Estern, wahlweise in Kombination mit Härtermonomeren, die ausgewählt sind aus Vinylhalogeniden, Methacrylaten mit niedrigem Molekulargewicht und Nitrilen.

6. Zusammensetzung nach Anspruch 5, worin die flexibilitätsverleihenden Monomere ausgewählt sind aus Ethylen und Butylacrylat.

7. Zusammensetzung nach irgendeinem der Ansprüche 5 und 6, worin die flexibilitätsverleihenden Monomere, wahlweise in Kombination mit Härtermonomeren, in Mengen von bis zu 70 Gew.-%, auf Basis des Trockengewichts des Harzes auf Vinylacetat-Basis, eingesetzt wurden.

8. Zusammensetzung nach irgendeinem der vorhergehenden Ansprüche, worin die Harze auf Vinylacetat-Basis Vinylacetathomopolymere sind, die mittels äußerer Mittel, ausgewählt aus organischen Phthalaten, organischen Phosphaten, Phthalylglycolaten und Polyestern, in einer Menge von 5 bis 50 Gew.-% auf Basis des Trockengewichts des Homopolymers weichgemacht sind.

9. Zusammensetzung nach irgendeinem der vorhergehenden Ansprüche, worin die wäßrige Dispersion der Bindemittelzusammensetzung eine Menge an Trockenmasse von 40 bis 80 Gew.-% enthält.

10. Zusammensetzung nach irgendeinem der vorhergehenden Ansprüche, worin die wäßrige Dispersion 1 bis 15 Gew.-% Harz auf Vinylacetat-Basis, berechnet als Trockenmasse, und 35 bis 60 Gew.-% Aminbindemittel, ebenfalls berechnet als Trockenmasse, enthält.

11. Zusammensetzung nach irgendeinem der vorhergehenden Ansprüche, die zusätzlich ein flammhemmendes Mittel enthält.

12. Zusammensetzung nach Anspruch 11, worin das flammhemmende Mittel ausgewählt ist aus NH₄H₂PO₄, H₃BO₃, Al(OH)₃, mit Chlorparaffin assoziiertem Sb₂O₃, und deren Mischungen.

13. Zusammensetzung nach irgendeinem der Ansprüche 11 und 12, worin das flammhemmende Mittel in Mengen von 5 bis 30 Gew.-% auf Basis des Gewichts des Lignozellulosematerials vorliegt.

14. Verwendung der nach irgendeinem der vorhergehenden Ansprüche erhaltenen Zusammensetzungen als Bindemittel für Lignozellulosematerial und bei der Herstellung von Spanplatten oder anderen Verbundartikeln.

15. Verwendung nach Anspruch 14, worin die Bindemittelzusammensetzung in einer Menge von 5 bis 25 Gew.-% als Trockengewicht, auf Basis des Lignozellulosematerials eingesetzt wird.

16. Verwendung nach irgendeinem der Ansprüche 14 und 15, worin die Bindemittelzusammensetzungen in situ auf dem Lignozellulosematerial hergestellt werden.

## Revendications (Revendications pour l'(les) Etat(s) contractant(s) suivant(s): AT, BE, CH, LI, DE, FR, GB, NL, SE)

1. Compositions liantes comprenant une dispersion aqueuse de :
(a) au moins un agent de liaison aminé à base d'un condensat mélamine-urée-formaldéhyde;
b) au moins une résine à base d'acétate de vinyle plastifiée par voie(s) interne et/ou externe dispersée dans l'eau présentant une température de transition vitreuse (Tg) inférieure à 5°C, comme agent favorisant le pouvoir collant à sec.

2. Composition selon la revendication 1, dans laquelle le composant liant aminé est composé d'une dispersion aqueuse renfermant une teneur, sur la base de 100 parties de résine sèche, d'au moins 20% en poids de mélamine, d'au moins 35% en poids d'urée, et d'au moins 40% en poids de formaldéhyde.

3. Composition selon l'une quelconque des revendications 1 et 2, dans laquelle la résine à base d'acétate de vinyle présente une température de transition vitreuse de -15 à 0°C et présente une température minimum filmogène d'environ 0°C.

4. Composition selon l'une quelconque des revendications précédentes, dans laquelle la résine à base d'acétate de vinyle peut être obtenue par copolymérisation d'acétate de vinyle avec des monomères conférant de la flexibilité choisis parmi les oléfines, les monomères acryliques et/ou métacryliques de haut poids moléculaire, les esters de diacides insaturés et les esters dérivés d'acides gras linéaires ou ramifiés et d'alcool vinylique, éventuellement combinés avec des monomères durcisseurs choisis parmi, halogénures de vinyle, nitriles et méthacrylates de faible poids moléculaire.

5. Composition selon la revendication 4, dans laquelle les monomères conférant de la flexibilité sont choisis parmi éthylène et butyl acrylate.

6. Composition selon l'une quelconque des revendications 4 et 5, dans laquelle les monomères conférant de la flexibilité, éventuellement combiné avec les monomères durcisseurs, ont été utilisés en une quantité atteignant jusqu'à 70% en poids, par rapport au poids à sec de la résine à base d'acétate de vinyle.

7. Composition selon l'une quelconque des revendications précédentes, dans laquelle les résines à base d'acétate de vinyle sont des homopolymères d'acétate de vinyle plastifiés au moyen d'agents externes choisis parmi des phtalates organiques, phosphates organiques, phtalyl glycolates, et polyesters, en une quantité de 5 à 50% en poids, par rapport au poids à sec de l'homopolymère.

8. Composition selon l'une quelconque des revendications précédentes, dans laquelle la dispersion aqueuse de la composition liante contient une quantité de matière sèche de 40 à 80% en poids.

9. Composition selon l'une quelconque des revendications précédentes, dans laquelle ladite dispersion aqueuse contient de 1 à 15% en poids de résine à base d'acétate de vinyle, calculé en tant que matière sèche, et de 30 à 60% en poids d'agent liant aminé, également calculé en matière sèche.

10. Composition selon l'une quelconque des revendications précédentes contenant en outre au moins un agent ignifugeant.

11. Composition selon la revendication 10, dans laquelle l'agent ignifugeant est choisi parmi NH₄H₂PO₄, H₃BO₃, Al(OH)₃, Sb₂O₃ associé à de la chloroparaffine, et de leurs mélanges.

12. Composition selon l'une quelconque des revendications 10 et 11, dans laquelle l'agent ignifugeant est présent en une quantité de 5 à 30% en poids, par rapport au poids du matériau lignocellulosique.

13. Procédé de préparation des compositions liantes selon l'une quelconque des revendications précédentes comprenant la dispersion avec agitation d'au moins 1 agent liant aminé tel que défini dans la revendication 1 dans une dispersion aqueuse de ladite résine à base d'acétate de vinyle, ou de façon alternative, le mélange de dispersions aqueuses des composants individuels.

14. L'utilisation des compositions obtenues selon l'une quelconque des revendications précédentes comme liant pour des matériaux lignocellulosiques et dans la fabrication de panneaux de particules ou d'autres articles composites.

15. L'utilisation selon la revendication 14, dans laquelle la composition liante est utilisée en une quantité de 5 à 25% par rapport au poids à sec du matériau lignocellulosique.

16. Utilisation selon l'une quelconque des revendications 14 et 15, dans laquelle les compositions liantes sont préparées in situ sur le matériau lignocellulosique.

## Revendications (Revendications pour l'(les) Etat(s) contractant(s) suivant(s): ES, GR)

1. Un procédé de préparation de compositions liantes, caractérisé en ce que ces compositions comprennent une dispersion aqueuse de :
(a) au moins un agent de liaison aminé à base d'un condensat mélamine-urée-formaldéhyde;
b) au moins une résine à base d'acétate de vinyle plastifiée par voie(s) interne et/ou externe dispersée dans l'eau présentant une température de transition vitreuse (Tg) inférieure à 5°C; comme agent favorisant le pouvoir collant à sec, caractérisé en ce que ledit procédé comprend la dispersion avec agitation d'au moins 1 agent liant aminé tel que défini dans la revendication 1 dans une dispersion aqueuse de ladite résine à base d'acétate de vinyle, ou de façon alternative, le mélange de dispersions aqueuses des composants individuels.

2. Compositions liantes comprenant une dispersion aqueuse de :
(a) au moins un agent de liaison aminé à base d'un condensat mélamine-urée-formaldéhyde;
b) au moins une résine à base d'acétate de vinyle plastifiée par voie(s) interne et/ou externe dispersée dans l'eau présentant une température de transition vitreuse (Tg) inférieure à 5°C, comme agent favorisant le pouvoir collant à sec.

3. Composition selon la revendication 2, dans laquelle le composant liant aminé est composé d'une dispersion aqueuse renfermant une teneur, sur la base de 100 parties de résine sèche, d'au moins 20% en poids de mélamine, d'au moins 35% en poids durée et d'au moins 40% en poids de formaldéhyde.

4. Composition selon l'une quelconque des revendications 2 et 3, dans laquelle la résine à base d'acétate de vinyle présente une température de transition vitreuse de -15 à 0°C et présente une température minimum filmogène d'environ 0°C.

5. Composition selon l'une quelconque des revendications précédentes, dans laquelle la résine à base d'acétate de vinyle peut être obtenue par copolymérisation d'acétate de vinyle avec des monomères conférant de la flexibilité choisis parmi les oléfines, les monomères acryliques et/ou métacryliques de haut poids moléculaire, les esters de diacides insaturés et les esters dérivés d'acides gras linéaires ou ramifiés et d'alcool vinylique, éventuellement combinés avec des monomères durcisseurs choisis parmi, halogénures de vinyle, nitriles et méthacrylates de faible poids molécutaire.

6. Composition selon la revendication 5, dans laquelle les monomères conférant de la flexibilité sont choisis parmi éthylène et butyl acrylate.

7. Composition selon l'une quelconque des revendications 5 et 6, dans laquelle les monomères conférant de la flexibilité, éventuellement combiné avec les monomères durcisseurs, ont été utilisés en une quantité atteignant jusqu'à 70% en poids, par rapport au poids à sec de la résine à base d'acétate de vinyle.

8. Composition selon l'une quelconque des revendications précédentes, dans laquelle les résines à base d'acétate de vinyle sont des homopolymères d'acétate de vinyle plastifiés au moyen d'agents externes choisis parmi des phtalates organiques, phosphates organiques, phtalyl glycolates, et polyesters, en une quantité de 5 à 50% en poids, par rapport au poids à sec de l'homopolymère.

9. Composition selon l'une quelconque des revendications précédentes, dans laquelle la dispersion aqueuse de la composition liante contient une quantité de matière sèche de 40 à 80% en poids.

10. Composition selon l'une quelconque des revendications précédentes, dans laquelle ladite dispersion aqueuse contient de 1 à 15% en poids de résine à base d'acétate de vinyle, calculé en tant que matière sèche, et de 30 à 60% en poids d'agent liant aminé, également calculé en matière sèche.

11. Composition selon l'une quelconque des revendications précédentes contenant en outre au moins un agent ignifugeant.

12. Composition selon la revendication 11, dans laquelle l'agent ignifugeant est choisi parmi NH₄H₂PO₄, H₃BO₃, Al(OH)₃, Sb₂O₃ associé à de la chloroparaffine, et de leurs mélanges.

13. Composition selon l'une quelconque des revendications 11 et 12, dans laquelle l'agent ignifugeant est présent en une quantité de 5 à 30% en poids, par rapport au poids du matériau lignocellulosique.

14. L'utilisation des compositions obtenues selon l'une quelconque des revendications précédentes comme liant pour des matériaux lignocellulosiques et dans la fabrication de panneaux de particules ou d'autres articles composites.

15. L'utilisation selon la revendication 14, dans laquelle la composition liante est utilisée en une quantité de 5 à 25% par rapport au poids à sec du matériau lignocellulosique.

16. Utilisation selon l'une quelconque des revendications 14 et 15, dans laquelle les compositions liantes sont préparées in situ sur le matériau lignocellulosique.
